Europäisches Patentamt

European Patent Office

Office européen des brevets

(11) Veröffentlichungsnummer : **0 275 113 B1**

# (12) EUROPÄISCHE PATENTSCHRIFT

(45) Veröffentlichungstag der Patentschrift :
**10.04.91 Patentblatt 91/15**

(51) Int. Cl.⁵ : **F16L 5/02, H02G 3/22**

(21) Anmeldenummer : **88100493.1**

(22) Anmeldetag : **15.01.88**

---

(54) Wanddurchführung für Rohre und Kabel.

(30) Priorität : **16.01.87 DE 8700714 U**

(43) Veröffentlichungstag der Anmeldung :
**20.07.88 Patentblatt 88/29**

(45) Bekanntmachung des Hinweises auf die
Patenterteilung :
**10.04.91 Patentblatt 91/15**

(84) Benannte Vertragsstaaten :
**AT BE CH DE ES FR IT LI LU NL SE**

(56) Entgegenhaltungen :
**DE-C- 1 082 465**
**DE-U- 1 872 956**
**FR-A- 2 197 139**
**FR-A- 2 573 255**
**GB-A- 1 314 345**

(73) Patentinhaber : **Betonbau GmbH**
**Schwetzinger Strasse 22-26**
**W-6833 Waghäusel (DE)**

(72) Erfinder : **Primus, Illo-Frank, Dr.-Ing. Dipl.-Ing.**
**Im Rennich 10**
**W-7500 Karlsruhe 41 (DE)**

(74) Vertreter : **Hiebsch, Gerhard F., Dipl.-Ing.**
**Hiebsch & Peege Patentanwälte Postfach464**
**Erzbergerstrasse 5a**
**W-7700 Singen 1 (DE)**

## Beschreibung

Die Erfindung betrifft eine Wanddurchführung – insbesondere wasser- und gasdichte Durchführung durch eine Betonwand einer Transformatorenstation, Gasstation, Pumpenstation oder eines Schalthauses – mit einem äußeren Rohr, das an einem Ende einen Außenflansch aufweist, sowie mit einem an das Außenrohr durch einen Ringsteg angefügten inneren Rohrstück, an dem einends ein elastisches Anschlußstück festliegt.

Eine derartige Wanddurchführung für einen Fluidstrom wird in der Schrift zum DE-U-1 872 956 beschrieben. Hierbei soll eine zuverlässige Abdichtung gegen unerwünschtes Eindringen von Gas durch eine Mauer sowie gleichzeitig eine elektrische Trennstelle geschaffen werden, die das Auftreten gefährlicher Spannungen verhindert. In einem Außenrohr ist an einem Endflansch ein Innenrohr fest verschweißt, das einerseits aus dem Außenrohr axial hinausragt sowie anderseits in diesem nahe eines anderen Flansches endet, der den Rohrinnenraum i.w. verschließt und lediglich einen Anschlußstutzen freiläßt. Im Innenrohr verläuft ein Rohranschlußstück mit einem am freien Ende vorgesehenen Gewinde. Dieses Rohranschlußstück ist mit den beiden Enden des Innenrohres durch elastische Balge verbunden, und es endet in einer vom Außenrohr gebildeten Kammer. Diese ist zum Durchführen von Strängen wie Rohren oder Kabeln nicht geeignet, ebenso fehlt es an einer Möglichkeit, in die Kammer hineinzugreifen. Zudem müßten an der Baustelle mindestens vier Abdichtungen hergestellt werden, nämlich zum einen am Rohrstutzen zum Flansch sowie zum anderen vom Innenrohr zum Flansch jeweils als Verschweißung und darüber hinaus die Anschlüsse vom Rohrstutzen zum Innenraum sowie vom Anschlußrohr zum ankommenden Rohr. Die aus elektrisch isolierendem Werkstoff bestehenden Balge bilden je zwei weitere Abdichtungsstellen, so daß mindestens acht Abdichtungsstellen entstehen.

Das aus dem Außenrohr ragende innere Rohrstück schließt einen Einbau in die Schalung vor der Herstellung der Wand aus, auch ist das am inneren Rohrstück befestigte Anschlußstück nicht über das durchzuführende Rohr legbar, sondern muß an einem weiteren Rohr befestigt werden, das zum Anschluß der Fluidleitung dient.

Die GB-A-1 314 345 zeigt eine Rohrdurchführung mit elastischem innerem Rohrstück, welches das – nur in einem sehr engen Durchmesserbereich wähl bare – durchzuführende Rohr dicht umschließt.

In Kenntnis dieses Standes der Technik hat sich der Erfinder das Ziel gesetzt, eine vielseitig einsetzbare Wanddurchführung für Kabel, Rohre od. dgl. zu schaffen, die aus möglichst wenig Einzelteilen besteht und das Durchführen in verschiedenen Winkeln zur Wandfläche erlaubt. Zudem soll die Wanddurchführung einfach einzubauen und problemlos gegen Wasser und Gas abzudichten sein.

Zur Lösung dieser Aufgabe führt zum einen, daß das offene Außenrohr das innere Rohrstück beidends überragt und der angeformte Ringsteg in axialem Abstand zum angeformten Außenflansch steht, wobei als elastisches Anschlußstück ein Schrumpfschlauch, ein Schrumpschlauchformstück oder eine Gummihülse dient, der/das/die lösbar über ein von außen zugängliches Ende des inneren Rohrstückes einerseits sowie vor diesem um ein durchzuführendes Rohr oder Kabel anderseits legbar ist, um dazwischen eine einwandfreie wasser- und gasdichte Verbindung herzustellen. Als weitere Lösung wird angeboten, daß das Außenrohr mit seinem den angeformten Außenflansch fernliegenden Ende an den Ringsteg angeformt ist, wobei als elastisches Anschlußstück ein Schrumpfschlauch, ein Schrumpfschlauchformstück oder eine Gummihülse dient, der/das/die lösbar über ein von außen zugängliches Ende des inneren Rohrstückes einerseits sowie vor diesem um ein durchzuführendes Rohr oder Kabel anderseits legbar ist, um dazwischen eine wasser- und gasdichte Verbindung herzustellen.

Bezüglich weiterer erfindungsgemäßer Merkmale wird auf die Unteransprüche verwiesen.

Die Erfindung wird nachfolgend anhand von in der Zeichnung dargestellten Ausführungsbeispielen näher beschrieben und erläutert. Die Zeichnung zeigt in :

Fig. 1 bis 5 und 7 bis 15 : Längsschnitte durch Wanddurchführungen in unter schiedlichen Ausführungsformen ;

Fig. 6 : einen Schnitt durch eine an die Wanddurchführung gemäß Fig. 5 angeformte Erdungsverbindung ;

Fig. 16 : einen Längsschnitt durch ein Ausfüh-rungsbeispiel einer Wanddurchführung mit abge-winkeltem äußeren Rohrstück ;

Fig. 17 und 18 : Längsschnitte durch Wanddurchführungen für verstärkte Wände ;

Fig. 19 : die Erdungsverbindung gemäß Fig. 6 in vergrößertem Maßstab und Verbindungsschrauben im Schnitt ;

Fig. 20 und 21 : eine Wanddurchführung mit einends drei parallelen Innenrohren kleinen Durchmessers und andernends einem gemeinsamen Außenrohr größeren Durchmessers in der Draufsicht bzw. im Schnitt ;

Fig. 22 und 25 : Draufsichten auf Wanddurchfüh-rungen in vier verschiedenen Ausführungsfor-men mit je drei parallelen Innenrohren am Innenflansch ;

Fig. 26 und 28 : Draufsichten auf einteilige Wand-durchführungen mit getrennt geführten Innenroh-ren ;

Fig. 27 : einen Längsschnitt durch die Durchführung Fig. 26 ;

Fig. 29 und 30 : Draufsichten auf unterschiedliche Zusammenstel lungen von Wanddurchführungen und

Fig. 31 und 32 : in einen Normbaustein eingesetzte Wanddurchführungen in Schrägsicht.

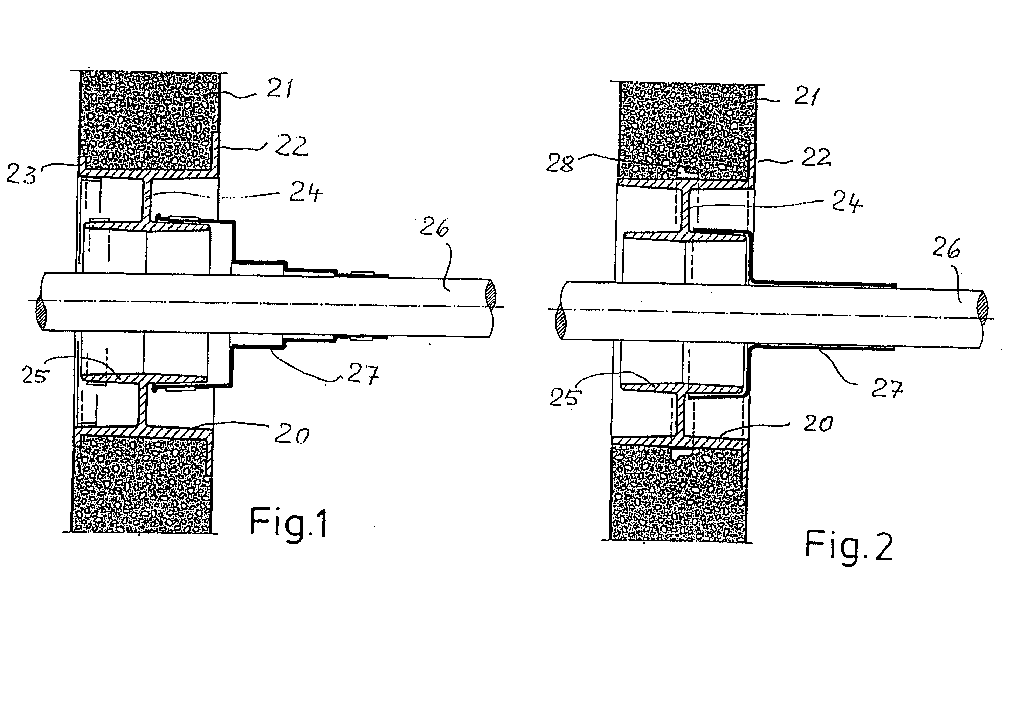

Eine Wanddurchführung ist gemäß Fig. 1 mit einem Außenrohr 20 versehen, das rund, oval, eckig od. dgl. ausgebildet sein kann und zur Herstellung einer gas- und wasserdichten Verbindung zwischen der Wanddurchführung und einer Betonwand 21 dient.

Das Außenrohr 20 weist an einem seiner beiden Enden einen hier quadratischen Außenflansch 22 auf, der vorzugsweise an die Innenseite der einen Raum eines Gehäuses begrenzenden Betonwand 21 gelegt ist. Der Außenflansch 22 hat mehrere Funktionen ; er ermöglicht das Annageln der Wanddurchführung an die Schalung für die Betonwand 21, so daß die Wanddurchführung ihrerseits als Abschalung für einen Durchlaß oder ein Loch in der Betonwand 21 dient, und er sorgt für die Einhaltung eines ausreichenden Abstandes zwischen zwei benachbarten Wandduchführungen, so daß zwischen diesen gegenügend Beton vorhanden ist, um die Wasserdichtigkeit des Betons zu gewährleisten. Am anderen Ende des Außerenrohrs 20 ist in diesem Ausführungsbeispiel ein weiterer, kleinerer Außenflansch 23 angeformt.

An der inneren Umfangsflache des Außenrohrs 20 ist in dessen Längomitte ein radical nach innen weisender Ringsteg 24 angeformt, der ein inneres Rohrstück 25 trägt. Dieses ist an seinen beiden Endstücken ca. 5 mm kürzer als das Außerenrohr 20, so daß das innere Rohrstück 25 an beiden Enden nicht aus dem Außenrohr 20 und somit auch nicht aus der Betonwand 21 hinausragt. Das innere Rohrstück 25 bietet eine gas- und waserdichte Abdichtung zwischen der Wanddurchführung und dem durch diese hindurchzuführende Rohr oder Kabel 26 an ; die Abdichtung zwischen dem inneren Rohrstück 25 und dem Kabel 26 ist durch einen Schrumpfschlauch 27 hergestellt, der einerseits auf das in das Gebaudeinnere weisende freie Endstück des inneren Rohrstückes 25 und andererseits auf die äußere Umfangsfläche des Kabels 26 aufgeschrumpft ist. Anstelle des Schrumpfschlauches 27 ist eine Gummitülle zur Abdichtung verwendbar. Die Dichtlykeit zum Kabel 26 wie zum inneren Rohrstück oder wird durch die Dehnfahigkeit des Gummis und durch Anzeihen von Edelstahl-Rohrschellen erwirkt, wobei der Abstand zwischen Außen- und Innenrohr 20 bzw. 25 so groß ist, daß die erforderliche Wekzeugzugangikeit zu den Anzugsschrauben bei Tüllen, Rohrverbindern etc. praxisgerecht gegeben ist.

Das Außenerohr 20 mit den Außenflanschen 22, 23, der Rinsgsteg 24 und as innere Rohrstück 25 sind ein einteiliges Aluminiumgußstück. Das hat den Vorteil, daß die Wanddurchführung auch größeren mechanischen Beanspruchungen insbesondere beim Betomierender Betonwand 21 standhält und die durch den Durchbruch in der Betonwand entstandene statische Schwächung ausgleicht, daß absolute Korrosionsbeständigkeit der Wanddurchführung gewahrleistet ist und diese beim Aufschrumpfen des Schrumpfschlauches 27 nicht überhitzt werden kann.

Die freie Rohrlänge des inneren Rohrstückes 25, auf die der Schrumpfschlauch 27 aufgeschrumpft ist, und der Abstand zwischen dem Außenrohr 20 und dem inneren Rohrstück 25, –also die radiale Länge des Rinsgsteg 24–

sind mindestens so groß, daß eine einwandfreie gasund wasserdichte Verbindung zum Kabel 26 mittels Flamme, Heißluftgeblase oder Werkzeug herstellbar und auf Dauer gewährleistet ist. Der Schrumpfschlauch 27 ermöglicht, daß das Kabel 26 nicht nur senkrecht zur Betonwand kann, wie in der Zeichnung dargestellt, sondern auch unter einem Winkel zur Betonwand, bis das Kabel 26 an dem inneren Rohrstück 25 anliegt. Um Beschädigungen des Kabels 26 hierbei zu vermeiden, sind sämtliche Kanten des inneren Rohrstückes 25 abgerundet.

Anders als bei den bekannten Wanddurchführungen besitzen die inneren Rohrstücke bei der erfinfungsgemaßen Wanddurchführung Normdurchmesser, so daß die am Markt erhältlichen Zubehörteile, wie Stopfen, Deckel, Übergangsverbinder, Gummitüllen, Muffen und dergleichen eingesetzt werden können.

Erfindungsgemaß ist nicht nur eine einseitige, sondern durch die beiden Enden des Innenrohres 25 Rinsgsteg 24 sogar eine doppeltwirkende, beidseitige Abdichtung mittels Schrumpfachlauch 27 oder Gummitülle möglich – bei gleichzeitigem Einsatz von Dichtungseinsätzen und Gummitüllen oder Schrumpfschläuchen 27 sogar eine mehrstufige sowie eine nachrüstbare Abdichtung.

Das Ausführungsbeispiel gemäß Fig. 2 entspricht im wesentlichen dem vorstehend beschriebenen Ausführungsbeispiel. Anstelle des an der Außenseite der Betonwand 21 vorgesehenen weiteren Außenflansches 23 sind bei diesem Ausführungsbeispiel an der äußeren Umfangsfläche des Außenrohrs 20 etwa in dessen Längsmitte ein Gummi-Rollringaus Neoprene 28 vorgesehen, der wie der weitere Außenflansch 23 die Wanddurchführung gegen Druckwasser abdichtet.

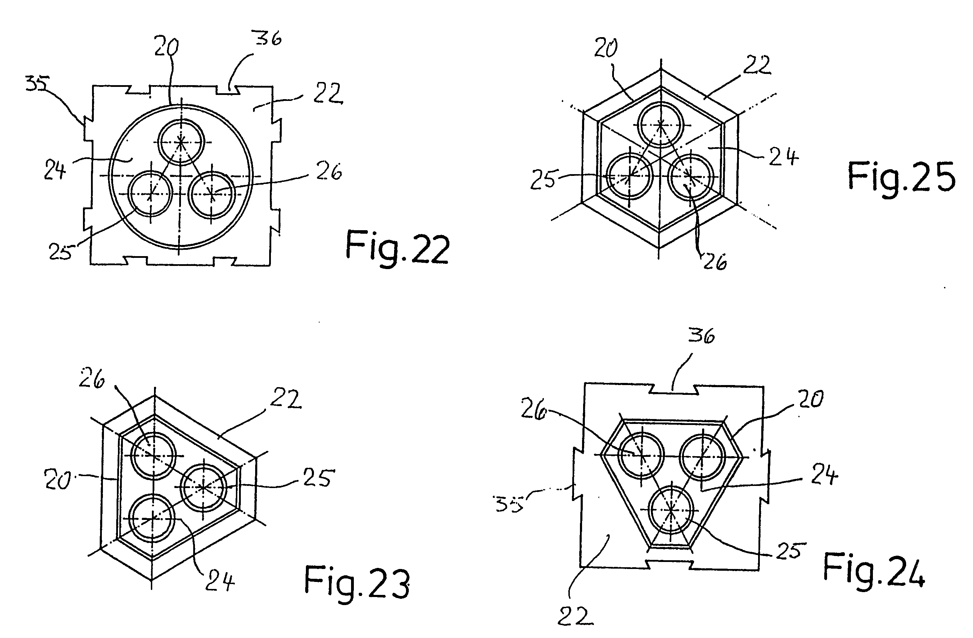

Bei den folgenden Ausführungsbeispielen sind die durchgeführten Rohre oder Kabel 26 und die diese mit dem inneren Rohrstück 25 verbindenden Schrumpfschläuche 27 aus Platzgründen nicht dargestellt. Ebenso sind die Wanddurchführungen der Übersichtlichkeit halber stets nur für ein einziges Rohr oder Kabel 26 wiedergegeben, obwohl sämtliche Ausführungsbeispiele für die Durchführung mehrerer parallel verlaufender Rohre oder Kabel 26 geeignet sind, wie insbesondere den Fig. 22 bis 25 entnahmbar ist. Auch ist nicht dargestellt, daß durch ein einziges Innenrohr 25 mittels entsprechender Schrumfschlauchformteile oder Dichteinsätze mehere Kabel 26 dicht durchührbar sind.

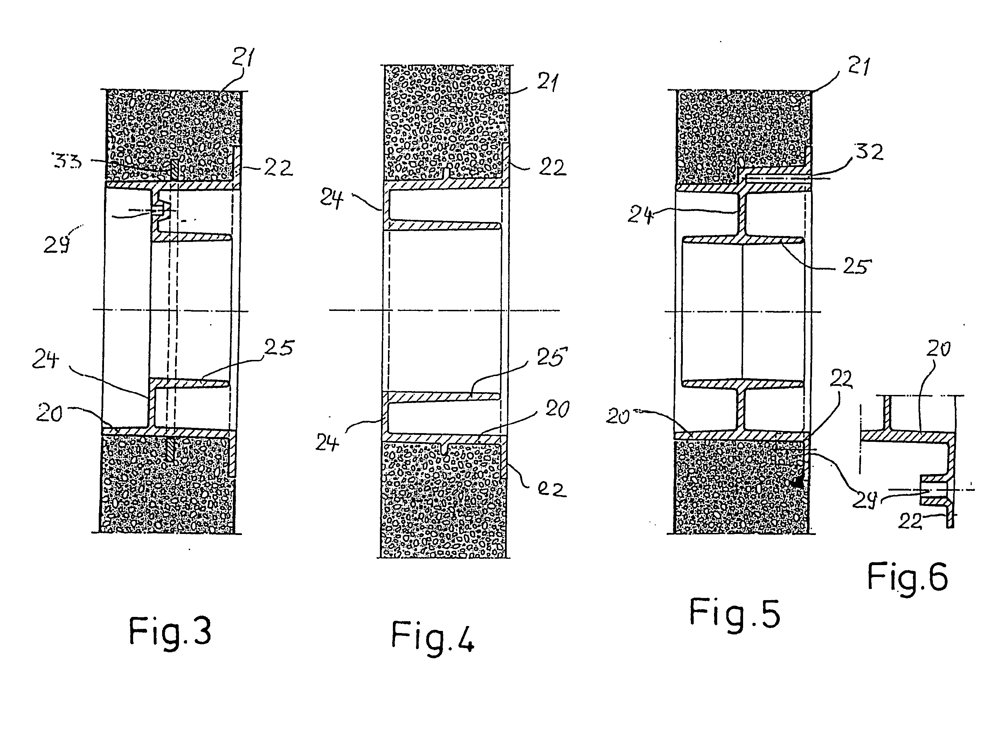

Bei der Wanddurchführung der Fig. 3 ist das vom Rinsgsteg 24 zur Außenseite der Betonwand 21 weisende Teilstück des inneren Rohrstückes 25 weggelassen, so daß das andere Teilstück, auf das der Schumpfschlaunch aufgeschrumpft wird, einen größere Lange aufweisen kann, wenn der Rinsgsteg 24 außermittig angeordnet ist. In diesem Ausführungsbeispiel ist am Rinsgsteg 24 eine Hülse 29 als Erdungsverbindung 29 vorgesehen, auf die spater an anderer Stelle noch näher eingegangen wird. Anstelle des Rollringes 28 ist mindestens eine umlaufende Rippe 33 vorhangen, die aus einem Guß angeformt oder als separates Teil aufschrumpfbar ist.

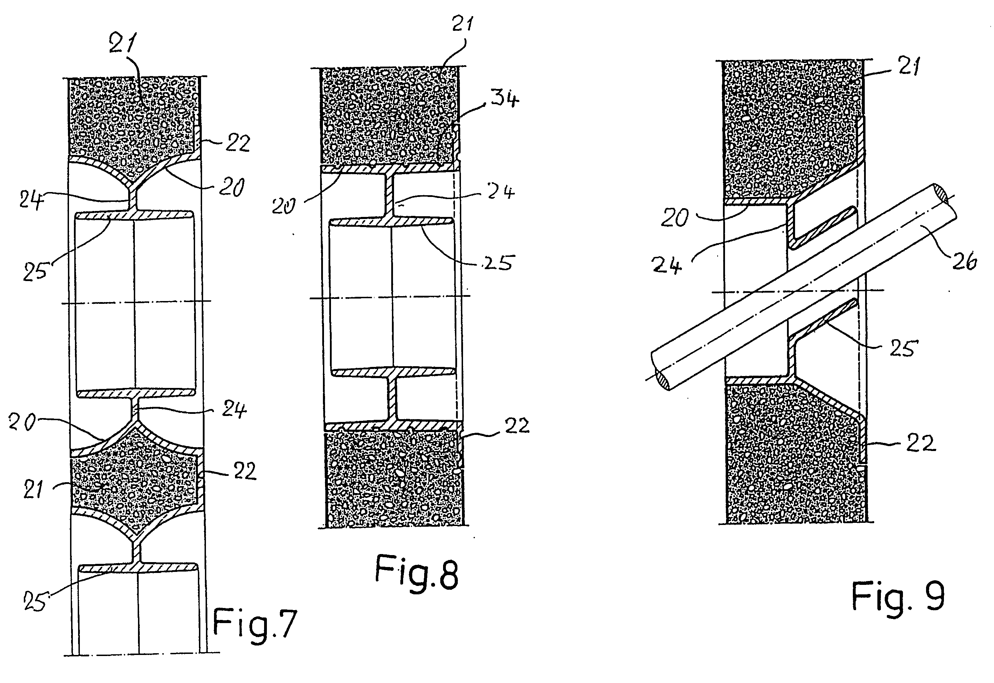

Bei der Wanddurchführung gemäß Fig. 4 ist der Rinsgsteg 24 an eine der Wandaußenflachen gerückt. Bei der Wanddurchführung gemäß Fig. 7 hat das Außenrohr 20 anstatt einer zylindrischen Form eine paraboloide, so daß bei Aneinanderreihung mehrerer Wanddurchführungen die Betonzwischenstege größere Querschnitte aufweisen und die Länge der Berührungsnaht zwischen Metalldurchführung und Beton in Richtung des Flüssigkeitsdruckes erhöht wird.

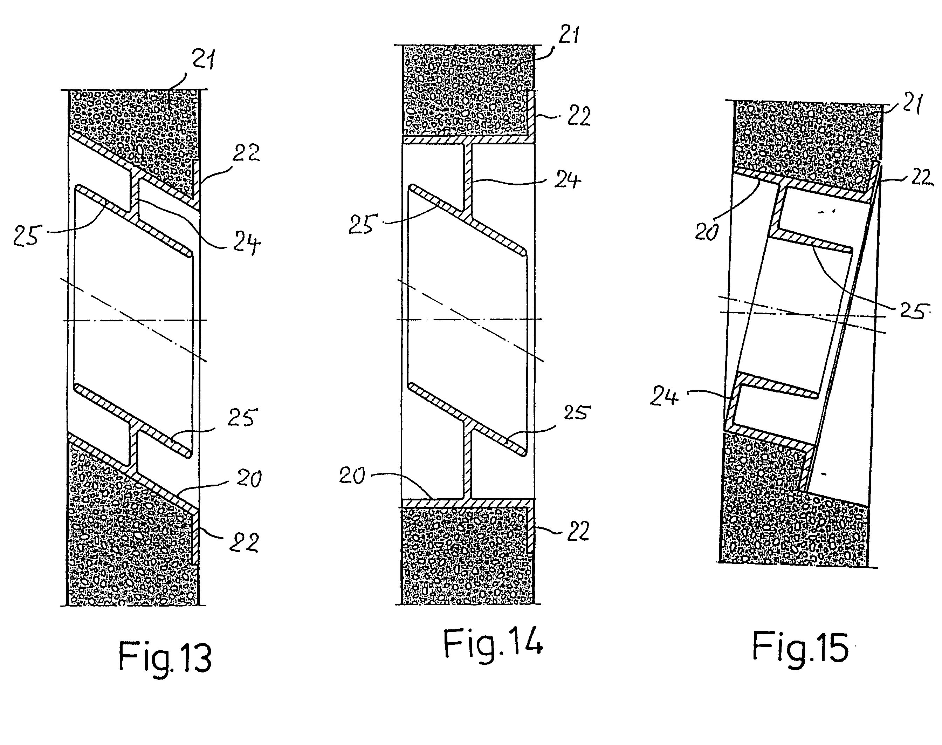

Bei der Wanddurchführung gemäß Fig. 5 ist die Hülse 29 im Außenflansch 22 vorgesehen sowie in Fig. 6 und 15 noch einmal in vergrößertem Maßstab dargestellt. Wie insbesondere aus Fig. 15 hervorgeht, ist in die Hülse 29 eine Edelstahlschraube 30 einschraubbar und durch eine Mutter 31 festlegbar. Vor dem Betonieren der Betonwand 21 wird die Schraube 30 gegebenenfalls unter Zwischenschaltung eines Stahlstabes mit der Bewehrung der Betonwand 21 verschweißt. Dadurch ist eine sichere Erdung der gesamten Wanddurchführung gewährleistet.

An anderer Stelle des Außenflansches 22 ist beim Ausführungsbeispiel der Fig. 5 eine Hülse 32 mit Innengewinde vorgesehen, in die ein handelsüblicher Einpreßnippel einschraubbar ist. Durch diesen Einpreßnippel kann nach dem Gießen der Betonwand 21 Epoxiharz unter hohem Druck von etwa 200 bar eingepreßt werden, so daß insbesondere in unmittelbarer Nähe des Außenrohrs 20 eine gute Verdichtung des Betons und damit eine ausgezeichnete Gas- und Wasserdichtigkeit im Bereich der Wanddurchführung gewährleistet ist. Eine derartige Hülse 32 ist bei Wanddurchführungen mit kleinem Durchmesser mindestens einmal pro Umfang vorgesehen, bei größeren Durchmessern können mehrere auf dem Umfang gleichmäßig verteilr Hülsen 32 vorhanden sein.

Die Wanddurchführung gemäß Fig. 8 unterscheidet sich von den Ausführungsbeispielen der Fig. 2 und 3 lediglich dadurch, daß auf der äußeren Umfangsfläche des Außenrohrs 20 Rillen 34 anstelle des Rollringes 28 bzw. der Rippe 33 vorgesehen sind. Auch diese Rillen 34 erhöhen die Haftung der Wanddurchführung und die Dichtigkeit der Betonwand 21. Zweckmäßigerweise können auch am Außenflansch 22 Rillen 34 vorgesehen werden, so daß später über eingelegte Rollringe Rohrflansche dicht an die Betonwand 21 anschließbar sind.

Die Wanddurchführungen gemäß Figur 9 bis 15 sind für die Durchführung von Kabel 26 oder Rohren unter einem extremen Winkel zur Wandnormalen bestimmt. Das innere Rohrstück 25 erstreckt sich bei den Ausführungsbeispielen gemäß Fig. 9, 12 und 15 vom Rinsgsteg 24 nur nach einer Seite und zwar vorzugsweise nach der dem Gebäudeinneren zugewandten Seite der Betonwand 21. Deshalb ist der Außenflansch 22 auch auf derjenigen Seite angeordnet, auf der sich das innere Rohrstück 25 befindet. Bei der Wanddurchführung gemäß Fig. 9 erweitert sich die nach dieser Seite weisende Hälfte des Außenrohrs 20 trichterförming, und das innere Rohrstück 25 ist – dem Öfnungswinkel des Trichters folgend – in eine Richtung abgewinkelt. Vor dem Einbetonieren wird der Wanddurchführung diejenige Winkellage gegeben, in die das durchzuführende Kabel 26 weisen soll. Dabei ist jede beliebige Richtung wählbar.

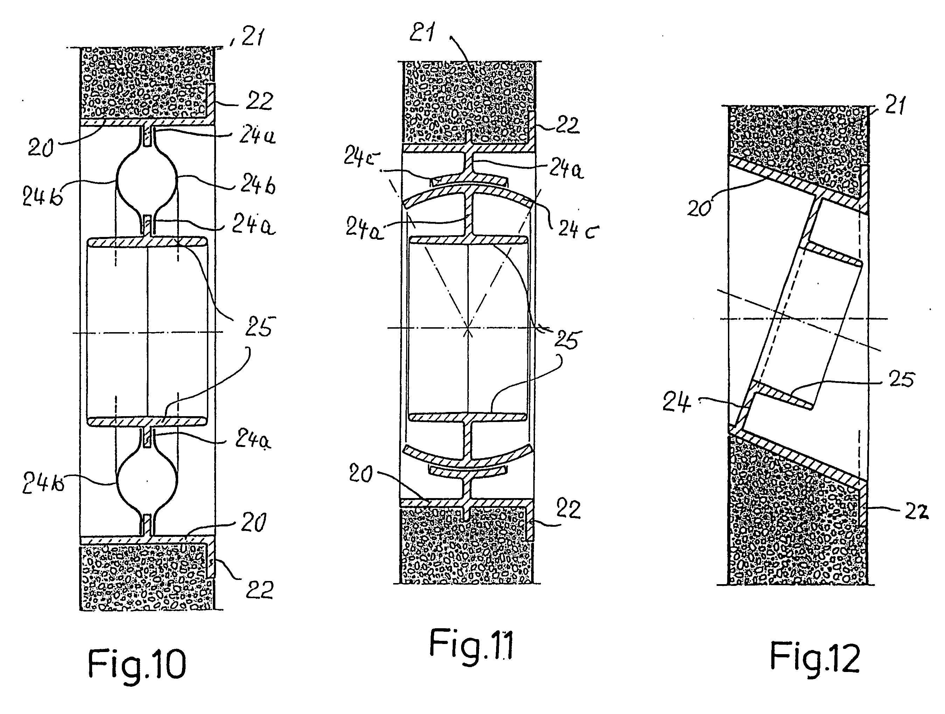

Obwohl auch diese Wanddurchführung einstückig aus Aluminium gegossen werden kann, ist es insbesondere in den Fällen, in denen die Richtung des durchzuführenden Kabels 26 noch nicht exakt festliegt, zweckmäßig, den Rinsgsteg 24 aus einer dichten elastischen Konstruktion oder aus Gummi oder einem anderen wasserdichten, elastischen Werkstoff herzustellen, der gas- und wasserdicht mit den angrenzenden Rohrstücken verbunden ist. Dadurch kann die Winkellage des inneren Rohrstückes 25 auch nach dem Einbetonieren der Wanddurchführung und Einführen des Kables 26 in gewissem Umfang verändert werden. Dies ist in besonderem Maß auch mittels der Wanddurchführungskonstruktion gemäß Figur 10 und 11 erreichbar, wobei der das Außenrohr 20 mit dem inneren Rohrstück 25 verbindende Rinsgsteg 24 auf zwei Flanschstümpfe 24a reduziert ist, die in Fig. 10 durch aufvulkanisierte Gumminanschetten 24b verbunden sind. Bei dem Beispiel gemäß Fig. 11 gehen die freien Enden der Flaschstümpfe 24a in konzentrisch gekrümmte Flächen 24c oder Kugelkalotten über, die nach erfolgter frei gewählter Winkellage mittels starrer Verbindung durch Epoxidharz, Kleber oder Schrumpfschlauch abdichtend verbunden werden.

Bei den Ausführungsbeispielen gemäß Fig. 12, 13 und 15 ist die gesamte Wanddurchführung unter einem spitzen Winkel zur Normalen der Betonwand 21 einbetoniert, wobei die Stirnfläche des Außenerohrs 20 auf derjenigen Seite, auf dem ihm kein inneres Rohrstück 25 gegenübersteht, abgeschrägt Stirnfläche in der Ebene der Außenfläche der Betomwand 21 liegt. Die Mittelachsen des Außenrohres 20 und des inneren Rohrstückes 25 verlaufen deckungsgleich. Beim Ausführungsbeispiel gemäß Fig. 12 liegt der Außenflansch 22 ebenfalls in der Ebene der einen Außenfläche der Betonwand 21, während beim Ausführungsbeispiel der Fig. 15 das Außenrohr 20 auf derjenigen Seite, zu der das innere Rohrstück 25 weist, auf dem gesamten Umfang eine einheitliche Länge besitzt, so daß der Außenflansch 22 bis auf einen Punkt seines Umfanges innerhalb der Betonwand 21 verläuft.

Bei den Wanddurchführungen der Fig. 13 und 14 erstreckt sich das innere Rohrstück 25 vom Ringsgsteg 24 nach beiden Seiten, wobei Kabel 26 unter einem extremen Winkel zur Wandnormalen eingeführt werden können. Bei Fig. 13 verlauft die Achse des Außenrohres 20 konzentrisch zu der des Innenrohres 25, wobei der Außenflansch 22 in der Ebene einer Außenfläche der Betonwand 21 liegt. Bei Fig. 14 stehen die Achsen von Außen- und Innenrohr 20mm/25 unter einem spitzen Winkel zueinander.

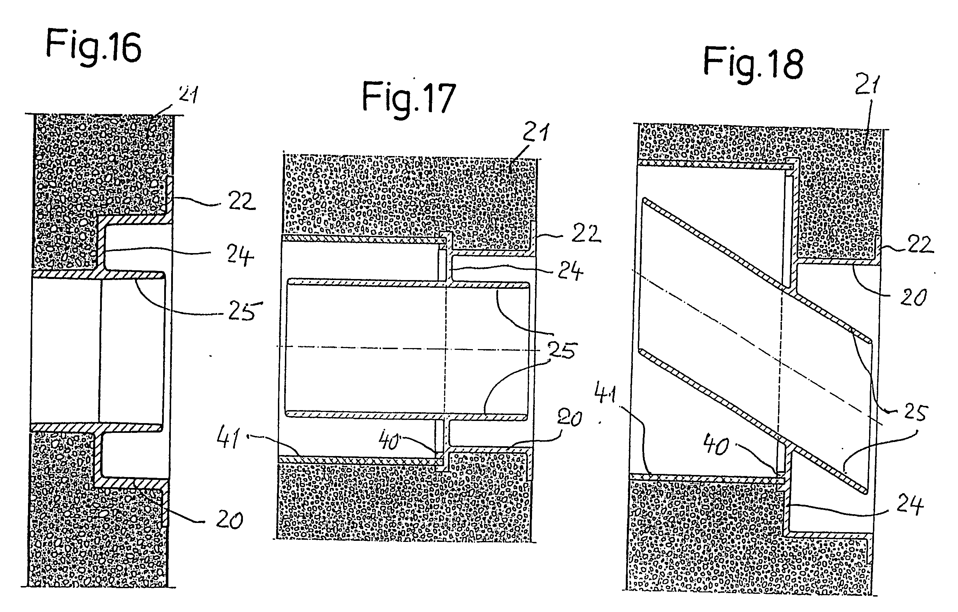

Bei der Ausführung nach Fig. 16 ist die zur Außenseite der Betonwand 21 bzw. des Gebäudes weisende Hälfte des Außenrohrs 20 vernachliengt. Bei dicken Betonwänden 21 ist die vorstehend beschriebene Wanddurchführung einseitig des Ringsleges 24 verlängert. Aus Kostengründen ist die Wanddurchführung bei dicken Wänden zweckmäßigerweise auch gemäß Fig. 17 und 18 ausführbar, wobei ein Teil des Außenrohres 20 aus handelsüblichen Kunstsoffrohren als lösbanen Teilen 41 gebildet wird, die vorzugsweise in eine dafür vorgesehene Nut 40 eingebracht werden.

Die Haftung der Wanddurchführung in der Betonwand 21 ist in einigen Ausführungsbeispielen durch Rollringe 28, Rippen 33 oder Rillen 34 verbessert. Diese Wirkung erzielt man auch, wenn die äußere Umfangsfläche des Außenrohrs 20 mit aufvulkanisiertem Gummi oder Spezialbeschichtungen beschichtet ist; eine Beschichtung auf der äußeren Umfangsfläche des inneren Rohrstückes 25 mit aufvulkanisertem Gummi oder eine Aufrauhung, Rillen, Gewinde etc. empfiehlt sich, da dadurch die Haftung des Schrumpfschlauches 27 erhöht wird. Bei elektrischen Kurzschlüssen empfiehlt es sich aus Sicherheitsgründen ferner, mindestens das Außenrohr 20 außen und den Außenflansch 22 und/oder das innere Rohrstück 24 innen mit einem elektrisch isolierendem Werkstoff zu beschichten. Um die metallischen Flächen der Wanddurchführung, soweit sie mit dem Beton in Berührung kommen, vor auch nur der geringsten Korrossionsgefghr zu schützen, sollen diese mit einem Schutzlack beschichte sein. Soweit diese Flächen der Außenluft zugewandt sind, ist es zweckmäßig, einen Abziehlack zu verwenden, der nach dem Ausbetonieren entfernt werden kann.

Um auch kleinste Mengen von Wasser davon abzuhalten, durch die Betonwand 21 zu dringen, sollte mindestens die äußere Umfangsfläche des Außenrohrs 20 mit einer wasserabdichtenden Klebemasse beschichtet werden. Die Rippe 33 im Ausführungsbeispiel der Fig. 3 kann nicht nur angegossen sein, sondern auch als Gummiteil aufgebracht werden oder mit einem Rollring, vorzugsweise aus wasserquellbarem Gummi, versehen sein. Beim Gießen der Betonwand 21 empfiehlt es sich, den Rauminhalt des Außenrohrs 20 durch Formteile, beispielsweise einen Deckel, zu verschließen oder beispielsweise mit Polystyrol auszuschäumen.

Der Außenflansch 22 ist vorzugsweise rechteckig, insbesondere quadratisch geformt. In diesem Fall ist auch das Endstück des Außenrohrs 20 von kreisrundem Querschnitt. Es lassen sich aber durchaus auch dreieckige, sechseckige, achteckige oder ovale Formen für das Endstück des Außerohrs 20 denken. Der Außenflansch 22 kann auch dreieckig, sechseckig oder achteckig oder so ausgebildet sein, daß es insbesondere bei mehreren parallel durch eine Wand 21 hindurchgeführten Kabeln 26 zu einer größeren Packungsdichte der Wanddurchführungen in einer Betonwand führt, d.h., der Abstand zwischen zwei benachbarten Wanddurchführungen verringert wird.

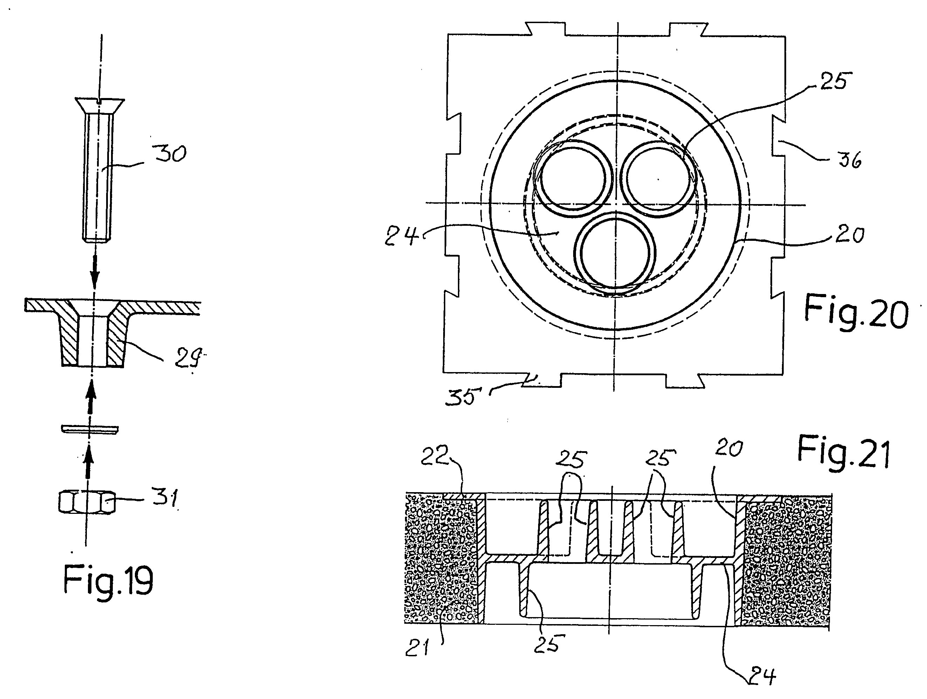

Wie aus Fig. 22 und 25 ersichtlich, können anstelle des einen durch eine Wanddurchführung hindurchzuführenden Kabels 26 auch mehere insbesondere drei parallelgeführte Kabel 26 durch eine Wanddurchführung hindurchgeführt werden. Dabei sind die Innenrohre 25 beidseitig des Ringsteg 24 in gleicher Anzahl mit gleichbleibendem Durchmesser, gemäß Fig. 20 und 21 auch einseitig in einem einzigen Innenrohr 25 münden ausführbar. Will man benachbarte Wanddurchführungen miteinander befestigen, so empfiehlt es sich, die Außenflansche 22 an ihren Außenkanten mit schwalbenschwanzförmigen Vor- bzw. Rücksprüngen 35 bzw. 36 zu versehen, die gegenseitig ineinander einrasten können.

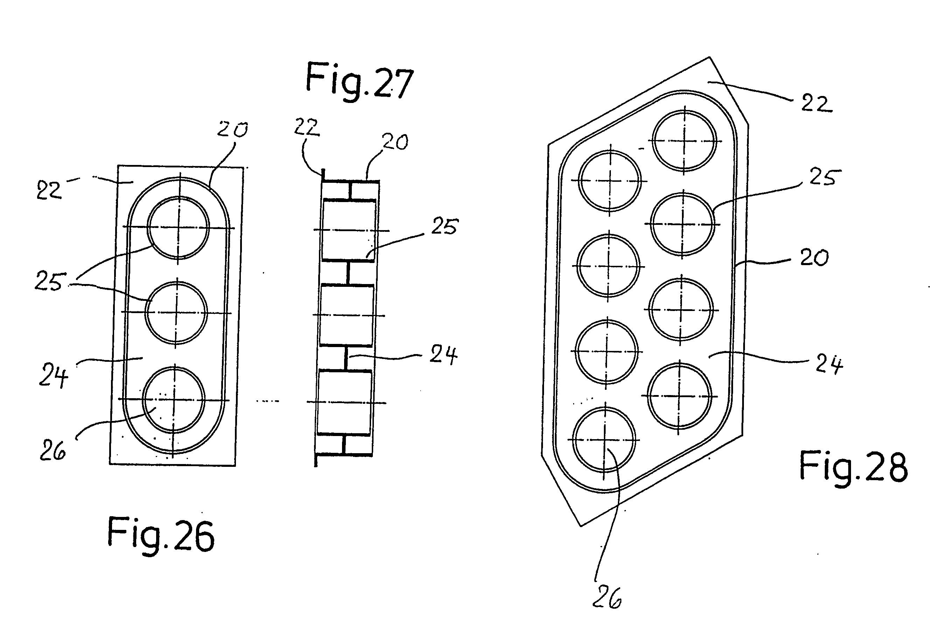

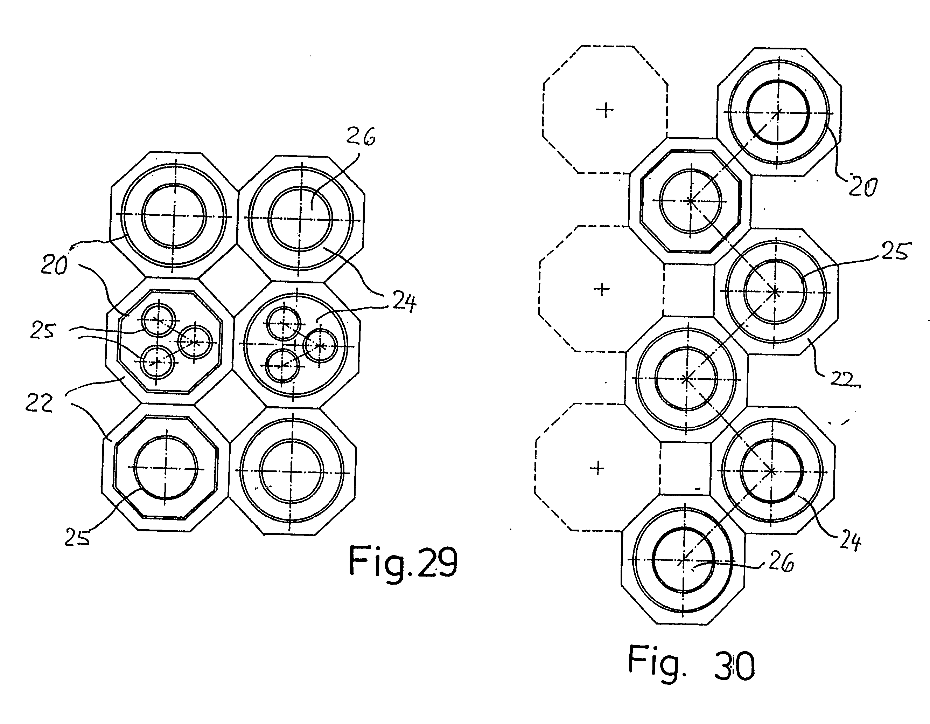

In den Fig. 26 und 28 sind einteilige Mehrfachdurchführungen, in den Fig. 29 und 30 Zusammenstellungen von mehreren wanddurchführungen teilweise unterschiedlicher Ausführungsform zu einem einheitlichen Arrangement dargestellt. Dabei können sowohl verscheidene Formen von Außenflanschen 22 als auch Wanddurchführungen mit unterschiedlichen Anzahlen von Innenrohren 25 am Ringsteg 24 miteinander kombiniert werden. Durch eine geschickte Anordnung der Wanddurchführungen und/oder geeignete Schrumpfformteile bzw Dichteinsätze lassen sich eine hohe Anzahl von Kabel- oder Rohrdurchführungen auf der Flacheneinheit unterbrigen. rungen auf der Flächeneinheit unterbringen.

Fig. 27 zeigt einen Längsschnitt durch die Anordnung gemäß Fig. 26. Für die drei kreisrunden Innenrohre 25 wird ein einziger Außenflansch 22 und ein einziger Ringsgsteg 24 benötigt. Anstelle der Schrumpfschlauche 27 für die einzelnen Kabeldurchführungen der eingangs beschriebenen Ausführungsbeispiele können auch bei diesen

Mehrfach-Kabeldurchführungen Schrumpfschlauchformteile, Gummitüllen oder Dichtungseinsätze verwendet werden, die entweder für Dreikabel-Durchführungen in einer Wanddurchführung geformt oder für mehrere Kabeldurchführungen in einem einheitlichen Arrangement ausgebildet sind.

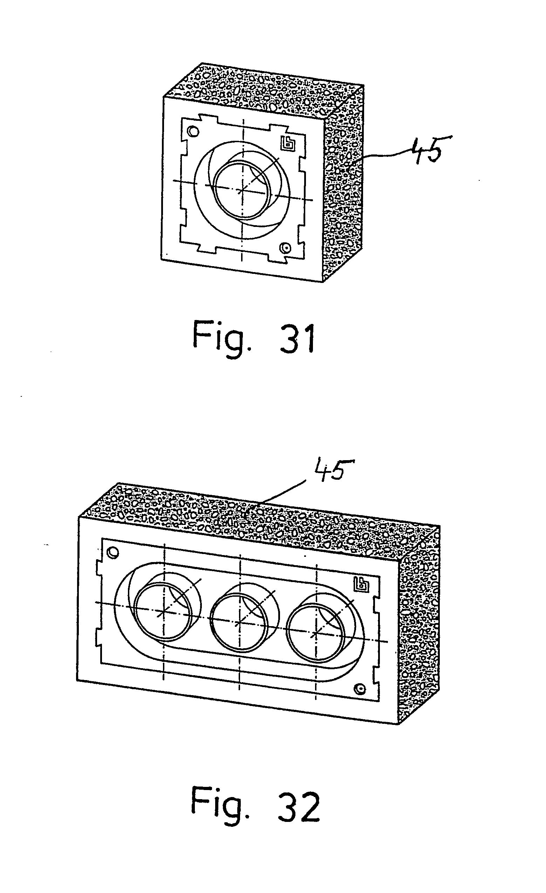

Samtliche erfindungsmäßigen Wanddurchführungen sind gemäß Fig. 31 und 32 in Betonfertigteile 45 im Steinformat oder dem mehrfachen eines Steinformates eingießbar und damit etwa bei außen z.B. mit Folie abgedichteten gemauerten Kellern oder Mauerwänden einsetzbar.

## Ansprüche

1. Wanddurchführung – insbesondere wasser- und gasdichte Durchführung durch eine Betonwand einer Transformatorenstation, Gasstation, Pumpenstation oder eines Schalthauses – mit einem äußeren Rohr, das an einem Ende einen Außenflansch aufweist, sowie mit einem an das Außenrohr durch einen Ringsteg angefügten inneren Rohrstück, an dem einends ein elastisches Anschlußstück festliegt, dadurch gekennzeichnet, daß das offene Außenrohr (20) das innere Rohrstück (25) beidends überragt und der angeformte Ringsteg (24) in axialem Abstand zum angeformten Außenflansch (22) steht, wobei als elastisches Anschlußstück ein Schrumpfschlauch (27), ein Schrumpfschlauchformstück oder eine Gummihülse dient, der/das/die lösbar über ein von außen zugängliches Ende des inneren Rohrstückes einerseits sowie vor diesem um ein durchzuführendes Rohr (26) oder Kabel anderseits legbar ist, um dazwischen eine einwandfreie wasser- und gasdichte Verbindung herzustellen.

2. Wanddurchführung – insbesondere wasser- und gasdichte Durchführung durch eine Betonwand einer Transformatorenstation, Gasstation, Pumpenstation oder eines Schalthauses – mit einem äußeren Rohr, das an einem Ende einen Außenflansch aufweist, sowie mit einem an das Außenrohr durch einen Ringsteg angefügten inneren Rohrstück, an dem einends ein elastisches Anschlußstück festliegt, dadurch gekennzeichnet, daß das Außenrohr (20) mit seinem den angeformten Außenflansch (22) fernliegenden Ende an den Ringsteg (24) angeformt ist, wobei als elastisches Anschlußstück ein Schrumpfschlauch (27), ein Schrumpfschlauchformstück oder eine Gummihülse dient, der/das/die lösbar über ein von außen zugängliches Ende des inneren Rohrstückes einerseits sowie vor diesem um ein durchzuführendes Rohr (26) oder Kabel anderseits legbar ist, um dazwischen eine wasser- und gasdichte Verbindung herzustellen.

3. Wanddurchführung nach Anspruch 1, dadurch gekennzeichnet, daß sich das innere Rohrstück (25) vom Ringsteg (24) nach einer Seite erstreckt.

4. Wanddurchführung nach Anspruch 1, dadurch gekennzeichnet, daß der Ringsteg (24) in Flanschstümpfe (24$_a$) geteilt ist und diese Teile relativ verschieblich miteinander verbunden sind.

5. Wanddurchführung nach Anspruch 4, gekennzeichnet durch Gummimanschetten (24$_b$) zwischen den Flanschstümpfen (24$_a$) des Ringsteges (24).

6. Wanddurchführung nach Anspruch 4, dadurch gekennzeichnet, daß die freien Enden der Flanschstümpfe (24$_a$) in konzentrisch gekrümmten Flächen (24$_c$) oder Kalotten enden.

7. Wanddurchführung nach Anspruch 6, gekennzeichnet durch jeweils einen an die benachbarten freien Enden der Teile (24$_a$) des Ringsteges (24) angeformten, querschnittlich um die Achse des inneren Rohrstückes (25) gekrümmten Quersteg (24$_o$), wobei beide benachbarten Querstege gleitbar aneinanderliegen.

8. Wanddurchführung nach einem der Ansprüche 1 bis 7, dadurch gekennzeichnet, daß das Außenrohr (20) lösbar quergeteilt ist.

9. Wanddurchführung nach Anspruch 8, dadurch gekennzeichnet, daß die lösbaren Teile (41) des Außenrohres (20) in einer Nutverbindung des anderen Teils festgelegt sind.

10. Wanddurchführung nach einem der Ansprüche 1 bis 9, dadurch gekennzeichnet, daß die Achse des inneren Rohrstückes (25) zum Außenflansch (22) geneigt ist.

11. Wanddurchführung nach Anspruch 10, dadurch gekennzeichnet, daß die Achse des geneigten inneren Rohrstückes (25) parallel zu der des Außenrohres (20) verläuft.

12. Wanddurchführung nach einem der Ansprüche 1 bis 11, dadurch gekennzeichnet, daß der Ringsteg (24) und/oder der Außenflansch (22) mit wenigstens einer Hülse (29) zur Aufnahme einer Erdungsverbindung versehen ist, die innerhalb der Querschnittslänge des Außenrohres liegt.

13. Wanddurchführung nach einem der Ansprüche 1 bis 12, dadurch gekennzeichnet, daß der Ringsteg (24) und/oder der Außenflansch (22) mit wenigstens einer sich parallel zum Außenrohr erstreckenden Hülse (32) als Aufnahme eines Nippels zum Einpressen von Epoxyharz versehen ist.

14. Wanddurchführung nach einem der Ansprüche 1 bis 13, dadurch gekennzeichnet, daß der Querschnitt des Außenrohres (20) sich vom Ansatz des Ringsteges (24) beidends nach außen erweitert, wobei gegebenenfalls zwei benachbarte Außenrohre einen hinterschnittenen Einsatzbereich für die Wand (21) bilden.

15. Wanddurchführung nach einem der Ansprüche 2 bis 14, dadurch gekennzeichnet, daß die Stirnkante des Außenrohres (20) an der Seite, an welcher der Ringsteg (24) an das Rohrstück angeformt ist bzw. die Stirnfläche des Außenflansches (22), unter einem Winkel zur Längsachse der Wanddurchführung abgeschrägt ist, wobei diese so in die Wand (21) einbaubar ist, daß die abgeschrägte Stirnfläche in der Ebene der einen der beiden Außenflächen der Wand liegt.

16. Wanddurchführung nach einem der Ansprüche 1 bis 15, dadurch gekennzeichnet, daß innerhalb des Außenrohres (20) mehrere durch Ringstege (24) miteinander verbundene innere Rohrstücke (25) vorgesehen sind.

17. Wanddurchführung nach einem der Ansprüche 1 bis 16, dadurch gekennzeichnet, daß dem Ringsteg (24) an einer Seite ein Rohrstück (25) großen Durchmessers sowie an der anderen Seite mehrere Rohrstücke demgegenüber kleineren Durchmessers angeformt sind.

18. Wanddurchführung nach einem der Ansprüche 1 bis 17, dadurch gekennzeichnet, daß an den Ringsteg (24) mehrere innere parallel verlaufende Rohrstücke (25), vorzugsweise drei Rohrstücke, angeformt sind.

19. Wanddurchführung nach einem der Ansprüche 1 bis 18, dadurch gekennzeichnet, daß die Kanten des inneren Rohrstücks (25) abgerundet sind.

20. Wanddurchführung nach einem der Ansprüche 1 bis 19, dadurch gekennzeichnet, daß mindestens die äußeren Umfangsflächen des Außenrohres (20) und des inneren Rohrstückes (25) aufgerauht sind und/oder Rillen (34), Rollringe (28), Rippen (33) oder Gewinde aufweisen.

21. Wanddurchführung nach einem der Ansprüche 1 bis 20, dadurch gekennzeichnet, daß mindestens das Außenrohr (20) und/oder das innere Rohrstück (20,25) mit aufvulkanisiertem Gummi beschichtet ist.

22. Wanddurchführung nach einem der Ansprüche 1 bis 20, dadurch gekennzeichnet, daß mindestens das Außenrohr (20) außen und der Außenflansch (22) innen und/oder das innere Rohrstück (25) innen mit einem elektrisch isolierenden Werkstoff beschichtet ist.

23. Wanddurchführung nach einem der Ansprüche 1 bis 20, dadurch gekennzeichnet, daß mit Beton in Berührung kommende Flächen mit einem Schutzlack sowie der Außenluft zugewandte Flächen mit einem Abziehlack beschichtet sind, der nach dem Ausbetonieren entfernbar ist.

24. Wanddurchführung nach einem der Ansprüche 1 bis 23, dadurch gekennzeichnet, daß mindestens der Rauminhalt des Außenrohres (20) durch geschäumtes Polystyrol od.dg. flächenbündig verschließbar ist.

25. Wanddurchführung nach einem der Ansprüche 1 bis 24, dadurch gekennzeichnet, daß der Außenflansch (22) rechteckig, sechseckig oder achteckig ausgebildet ist und an seinen Außenkanten schwalbenschwanzförmige Vor- bzw. Rücksprünge (35 bzw. 36) vorgesehen sind.

26. Wanddurchführung nach wenigstens einem der Ansprüche 1 bis 25, dadurch gekennzeichnet, daß sie ein einteiliges Aluminiumgußstück ist.

27. Wanddurchführung nach einem der vorhergehenden Ansprüche, dadurch gekennzeichnet, daß sie in ein Betonfertigteil (45) einbetoniert ist, das Steinformat oder das Mehrfache eines Steinformates besitzt.

28. Wanddurchführung nach einem der vorhergehenden Ansprüche, dadurch gekennzeichnet, daß mehrstufige Abdichtungen durch gleichzeitigen Einsatz von Dichtungseinsätzen und Schrumpfschläuchen oder Gummitüllen gebildet sind.

## Claims

1. A wall bushing, in particular a water- and gas-tight bushing for passing through a concrete wall of a transformer station, gas station, pumping station or distribution station, comprising an outer tube which at one end has an outer flange, and an inner tube portion which is attached to the outer tube by an annular web and to which a resilient connecting portion is fixed at one end, characterised in that the open outer tube (20) projects beyond the inner tube portion (25) at both ends and the annular web (24) formed thereon is disposed at an axial spacing relative to the outer flange (22) formed thereon, wherein the resilient connecting portion is a shrink tube member (27), a shrink tube shaped portion or a rubber sleeve which can be releasably fitted over an end of the inner tube portion which is accessible from the outside, on the one hand, and in front of the inner tube portion around a tube (26) or cable to be passed through the wall, on the other hand, in order to make therebetween a satisfactory water- and gas-tight connection.

2. A wall bushing, in particular a water- and gas-tight bushing for passing through a concrete wall of a transformer station, gas station, pumping station or distribution station, comprising an outer tube which at one end has an outer flange, and an inner tube portion which is attached to the outer tube by an annular web and to which a resilient connecting portion is fixed at one end, characterised in that the outer tube (20) is formed with its end remote from the outer flange (22) formed thereon, on the annular web (24), wherein the resilient connecting portion is a shrink tube member (27), a shrink tube shaped portion or a rubber sleeve which can be releasably fitted over an end of the inner tube portion which is accessible from the outside, on the one hand, and in front of the inner tube portion around a tube (26) or cable to be passed through the wall, on the other hand, in order to make therebetween a water- and gas-tight connection.

3. A wall bushing according to claim 1 characterised in that the inner tube portion (25) extends from the annular web (24) towards one side.

4. A wall bushing according to claim 1 characterised in that the annular web (24) is divided into flange

stump portions (24$_a$) and those parts are relatively displaceably connected together.

5. A wall bushing according to claim 4 characterised by rubber cuffs (24$_b$) between the flange stump portions (24$_a$) of the annular web (24).

6. A wall bushing according to claim 4 characterised in that the free ends of the flange stump portions (24$_a$) terminate in concentrically curved surfaces (24$_c$) or cup portions.

7. A wall bushing according to claim 6 characterised by a respective transverse web (24$_c$) which is formed on each of the adjacent free ends of the parts (24$_a$) of the annular web (24) and which is curved in respect of its cross-section around the axis of the inner tube portion (25), wherein the two adjacent transverse webs bear slidably against each other.

8. A wall bushing according to one of claims 1 to 7 characterised in that the outer tube (20) is releasably transversely divided.

9. A wall bushing according to claim 8 characterised in that the releasable parts (41) of the outer tube (20) are fixed in a groove connection of the other part.

10. A wall bushing according to one of claims 1 to 9 characterised in that the axis of the inner tube portion (25) is inclined relative to the outer flange (22).

11. A wall bushing according to claim 10 characterised in that the axis of the inclined inner tube portion (25) extends parallel to that of the outer tube (20).

12. A wall bushing according to one of claims 1 to 11 characterised in that the annular web (24) and/or the outer flange (22) is provided with at least one socket (29) for receiving an earthing connection which lies within the cross-sectional length of the outer tube.

13. A wall bushing according to one of claims 1 to 12 characterised in that the annular web (24) and/or the outer flange (22) is provided with at least one socket (32) extending parallel to the outer tube, as a means for receiving a nipple for the injection of epoxy resin.

14. A wall bushing according to one of claims 1 to 13 characterised in that the cross-section of the outer tube (20) enlarges outwardly at both ends from the attachment of the annular web (24), wherein optionally two adjacent outer tubes form an undercut insert region for the wall (21).

15. A wall bushing according to one of claims 2 to 14 characterised in that the end edge of the outer tube (20) at the side at which the annular web (24) is formed on the tube portion or the end face of the outer flange (22) is inclined at an angle relative to the longitudinal axis of the wall bushing, wherein the latter can be fitted into the wall (21) in such a way that the inclined end face lies in the plane of the one of the two outer surfaces of the wall.

16. A wall bushing according to one of claims 1 to 15 characterised in that provided within the outer tube (20) are a plurality of inner tube portions (25) which are connected together by annular webs (24).

17. A wall bushing according to one of claims 1 to 16 characterised in that a tube portion (25) of large diameter is formed on the annular web (24) at one side and a plurality of tube portions of a diameter which is smaller in comparison therewith are formed thereon on the other side.

18. A wall bushing according to one of claims 1 to 17 characterised in that a plurality of inner tube portions (25) which extend in parallel relationship, preferably three tube portions, are formed on the annular web (24).

19. A wall bushing according to one of claims 1 to 18 characterised in that the edges of the inner tube portion (25) are rounded.

20. A wall bushing according to one of claims 1 to 19 characterised in that at least the outer peripheral surfaces of the outer tube (20) and the inner tube portion (25) are roughened and/or have grooves (34), rolling rings (28), ribs (33) or screwthreads.

21. A wall bushing according to one of claims 1 to 20 characterised in that at least the outer tube (20) and/or the inner tube portion (20, 25) is coated with rubber vulcanised thereon.

22. A wall bushing according to one of claims 1 to 20 characterised in that at least the outer tube (20) on the outside and the outer flange (22) on the inside and/or the inner tube portion (25) on the inside is coated with an electrically insulating material.

23. A wall bushing according to one of claims 1 to 20 characterised in that surfaces coming into contact with concrete are coated with a protective paint and surfaces rich are towards the outside air are coated with a removable paint which can be removed after the concreting operation.

24. A wall bushing according to one of claims 1 to 23 characterised in that at least the interior volume of the outer tube (20) can be closed in flush relationship with the surface by foamed polystyrene or the like.

25. A wall bushing according to one of claims 1 to 24 characterised in that the outer flange (23) is of a right-angled, hexagonal or octagonal configuration and dovetail-shaped projections and recesses (35 and 36 respectively) are provided at its outer edges.

26. A wall bushing according to at least one of claims 1 to 25 characterised in that it is a one-piece alumonium casting.

27. A wall bushing according to one of the preceding claims characterised in that it is concreted into a finished concrete component (45) sich has a brick format or the multiple of a brick format.

28. A wall bushing according to one of the preceding claims characterised in that multi-stage sealing means are formed by the simultaneous use of sealing inserts and shrink tube members or rubber sockets.

## Revendications

1. Elément de traversée murale, notamment élément de traversée étanche à l'eau et aux gaz pour un mur en béton d'une station de transformation, d'une station de gaz, d'une station de pompage ou d'un poste de distribution, comportant un tube extérieur qui présente un flasque extérieur à une extrémité, ainsi qu'un tronçon de tube intérieur raccordé au tube extérieur par une nervure annulaire, une pièce de raccordement élastique étant fixée à une extrémité du tronçon de tube intérieur, caractérisé en ce que le tube extérieur ouvert (20) déborde du tronçon de tube intérieur (25) aux deux extrémités et en ce que la nervure annulaire rapportée (24) est décalée axialement par rapport au flasque extérieur rapporté (22), une gaine rétractable (27), un raccord formant gaine rétractable ou un manchon en caoutchouc servant de pièce de raccordement élastique qui peut être disposée de manière amovible sur une extrémité du tronçon de tube intérieur accessible de l'extérieur d'une part, et à l'avant de ce dernier, autour d'un tuyau (26) ou d'un câble traversant d'autre part, pour établir entre eux une liaison parfaitement étanche à l'eau et aux gaz.

2. Elément de traversée murale, notamment élément de traversée étanche à l'eau et aux gaz pour un mur en béton d'une station de transformation, d'une station de gaz, d'une station de pompage ou d'un poste de distribution, comportant un tube extérieur qui présente un flasque extérieur à une extrémité, ainsi qu'un tronçon de tube intérieur raccordé au tube extérieur par une nervure annulaire, une pièce de raccordement élastique étant fixée à une extrémité du tronçon de tube intérieur, caractérisé en ce que le tube extérieur (20) est rapporté sur la nervure annulaire (24) par son extrémité éloignée du flasque extérieur rapporté (22), une gaine rétractable (27), un raccord formant gaine rétractable ou un manchon en caoutchouc servant de pièce de raccordement élastique qui peut être disposée de manière amovible sur une extrémité du tronçon de tube intérieur accessible de l'extérieur d'une part, et à l'avant de ce dernier, autour d'un tuyau (26) ou d'un câble traversant d'autre part, pour établir entre eux une liaison parfaitement étanche à l'eau et aux gaz.

3. Elément de traversée murale selon la revendication 1, caractérisé en ce que le tronçon de tube intérieur (25) s'étend vers un côté à partir de la nervure annulaire (24).

4. Elément de traversée murale selon la revendication 1, caractérisé en ce que la nervure annulaire (24) est divisée en flasques tronqués (24$_a$), et en ce que ces parties sont reliées entre elles avec liberté de déplacement relatif.

5. Elément de traversée murale selon la revendication 4, caractérisé par des soufflets en caoutchouc (24$_b$) entre les flasques tronqués (24$_a$) de la nervure annulaire (24).

6. Elément de traversée murale selon la revendication 4, caractérisé en ce que les extrémités libres des flasques tronqués (24$_a$) se terminent par des surfaces courbes (24$_c$) ou des calottes sphériques ayant le même centre de courbure.

7. Elément de traversée murale selon la revendication 6, caractérisé par une nervure transversale (24$_c$) rapportée sur les extrémités libres voisines de chacune des parties (24$_a$) de la nervure annulaire (24), et courbée, en section, autour de l'axe du tronçon de tube intérieur (25), les deux nervures transversales voisines étant appliquées l'une contre l'autre avec liberté de glissement.

8. Elément de traversée murale selon l'une des revendications 1 à 7, caractérisé en ce que le tube extérieur (20) est divisé transversalement de façon amovible.

9. Elément de traversée murale selon la revendication 8, caractérisé en ce que les parties amovibles (41) du tube extérieur (20) sont fixées dans une rainure de l'autre partie.

10. Elément de traversée murale selon l'une des revendications 1 à 9, caractérisé en ce que l'axe du tronçon de tube intérieur (25) est incliné par rapport au flasque extérieur (22).

11. Elément de traversée murale selon la revendication 10, caractérisé en ce que l'axe du tronçon de tube intérieur incliné (25) s'étend parallèlement à celui du tube extérieur (20).

12. Elément de traversée murale selon l'une des revendications 1 à 11, caractérisé en ce que la nervure annulaire (24) et/ou le flasque extérieur (22) sont munis d'au moins une douille (29) destinée à recevoir une prise de terre et située en-deçà de l'étendue du tube extérieur en section longitudinale.

13. Elément de traversée murale selon l'une des revendications 1 à 12, caractérisé en ce que la nervure annulaire (24) et/ou le flasque extérieur (22) sont munis d'au moins une douille (32) s'étendant parallèlement au tube extérieur et destinée à recevoir un raccord fileté pour l'injection de résine époxy.

14. Elément de traversée murale selon l'une des revendications 1 à 13, caractérisé en ce que la section du tube extérieur (20) s'agrandit vers l'extérieur de chaque côté à partir de la base de la nervure annulaire (24), deux tubes extérieurs voisins formant, le cas échéant, un logement en contre-dépouille pour le mur (21).

15. Elément de traversée murale selon l'une des revendications 2 à 14, caractérisé en ce que le bord frontal du tube extérieur (20), du côté où la nervure annulaire (24) est rapportée sur le tronçon de tube, ou la face frontale du flasque extérieur (22), est réalisé en biseau avec un angle par rapport à l'axe longitudinal de l'élément de traversée murale, celui-ci pouvant être monté dans le mur (21) de façon que la face frontale en biseau soit située dans le plan de l'une des deux surfaces extérieures du mur.

16. Elément de traversée murale selon l'une des revendications 1 à 15, caractérisé en ce qu'à l'intérieur du tube extérieur (20), sont prévus plusieurs tronçons de tube intérieurs (25) reliés entre eux par des nervures annulaires (24).

17. Elément de traversée murale selon l'une des revendications 1 à 16, caractérisé en ce que sur la nervure annulaire (24) sont formés, d'un côté, un tronçon de tube (25) de grand diamètre, ainsi que, de l'autre côté, plusieurs tronçons de tube de diamètres plus petits.

18. Elément de traversée murale selon l'une des revendications 1 à 17, caractérisé en ce que plusieurs tronçons de tube intérieurs (25) parallèles, de préférence trois tronçons de tube, sont formés sur la nervure annulaire (24).

19. Elément de traversée murale selon l'une des revendications 1 à 18, caractérisé en ce que les bords du tronçon de tube intérieur (25) sont arrondis.

20. Elément de traversée murale selon l'une des revendications 1 à 19, caractérisé en ce qu'au moins les surfaces périphériques extérieures du tube extérieur (20) et du tronçon de tube intérieur (25) sont rendues rugueuses et/ou présentent des gorges (34), des bagues (28), des nervures (33) ou un filetage.

21. Elément de traversée murale selon l'une revendications 1 à 20, caractérisé en ce qu'au moins le tube extérieur (20) et/ou le tronçon de tube intérieur (25) sont revêtus de caoutchouc vulcanisé.

22. Elément de traversée murale selon l'une des revendications 1 à 20, caractérisée en ce qu'au moins l'extérieur du tube extérieur (20) et l'intérieur du flasque extérieur (22), et/ou l'intérieur du tronçon de tube intérieur (25) sont revêtus de matériau électriquement isolant.

23. Elément de traversée murale selon l'une des revendications 1 à 20, caractérisé en ce que des surfaces venant au contact du béton sont revêtues d'un vernis protecteur, et des surfaces au contact de l'air d'un vernis pelliculable qui peut être retiré après le scellement dans le béton.

24. Elément de traversée murale selon l'une des revendications 1 à 23, caractérisé en ce qu'au moins le volume intérieur du tube extérieur (20) peut être obturé jusqu'au ras des faces latérales, par du polystyrène expansé ou analogue.

25. Elément de traversée murale selon l'une des revendications 1 à 24, caractérisé en ce que le flasque extérieur (22) est de forme rectangulaire, hexagonale ou octogonale, et présente sur ses bords extérieurs des protubérances ou des évidements (35 ou 36) en forme de queue d'aronde.

26. Elément de traversée murale selon au moins l'une des revendications 1 à 25, caractérisé en ce qu'il est constitué par une pièce moulée en aluminium, d'un seul tenant.

27. Elément de traversée murale selon l'une des revendications précédentes, caractérisé en ce qu'il est scellé dans une pièce préfabriquée en béton (45), qui présente le format d'une brique ou de plusieurs briques.

28. Elément de traversée murale selon l'une des revendications précédentes, caractérisé en ce que des étanchéités à plusieurs niveaux sont formées par mise en oeuvre simultanée de garnitures d'étanchéité et de gaines rétractables ou de manchons en caoutchouc.

Fig.1

Fig.2

EP 0 275 113 B1

Fig.3

Fig.4

Fig.5

Fig.6

EP 0 275 113 B1

Fig. 9

Fig.8

Fig.7

Fig.10

Fig.11

Fig.12

EP 0 275 113 B1

**Fig.13**

**Fig.14**

**Fig.15**

Fig.18

Fig.17

Fig.16

Fig.19

Fig.20

Fig.21

EP 0 275 113 B1

Fig.22

Fig.23

Fig.24

Fig.25

Fig.27

Fig.26

Fig.28

EP 0 275 113 B1

Fig. 30

Fig.29

Fig. 31

Fig. 32